# EUROPEAN PATENT APPLICATION

(11) **EP 4 618 001 A1**
(43) Date of publication of application: **17.09.2025**
(21) Application number: 22966678.9
(22) Date of filing: 28.11.2022
(51) Int. Cl.: G06T 7/00, H04W 64/00, G07C 9/00

(54) **CALIBRATION METHOD, APPARATUS AND SYSTEM**

(71) Applicant: Shenzhen Yinwang Intelligent Technologies Co., Ltd., Shenzhen, Guangdong 518129 (CN)
(72) Inventor: ZHANG, Wei, Shenzhen, Guangdong 518129 (CN); PEI, Yan, Shenzhen, Guangdong 518129 (CN); LI, Yuxiang, Shenzhen, Guangdong 518129 (CN)
(74) Representative: MERH-IP Matias Erny Reichl Hoffmann Patentanwälte PartG mbB
(86) International application number: PCT/CN2022/134596
(87) International publication number: WO 2024/113073

(57) **Abstract**

Embodiments of this application provide a calibration method, apparatus, and system. The method is applied to a mobile terminal. The method includes: The mobile terminal receives a first message sent by a carrier, where the first message includes location information of at least one first calibration point; and the mobile terminal prompts, based on the first message, a user to move to the at least one first calibration point, where a first signal that is sent by the mobile terminal and that corresponds to the at least one first calibration point is used for calibration of the mobile terminal. According to the method, carrier calibration can be more accurate, to improve user experience of touchless unlocking and locking performed by using a digital key technology.

## Description

### TECHNICAL FIELD

Embodiments of this application relate to the field of intelligent vehicles, and more specifically, to a calibration method, apparatus, and system.

### BACKGROUND

As intelligent vehicles are widely used in daily life, users expect that the intelligent vehicles and related devices can bring more comfortable intelligent experience. In this context, a digital key technology emerges.

A main function of the digital key technology is: The user may establish a connection to the vehicle by using a terminal device, for example, a mobile phone, and a vehicle door is unlocked when the mobile phone approaches the vehicle from a distance, or a vehicle door is locked when the mobile phone is away from the vehicle. However, before this technology is applied, the vehicle needs to complete calibration based on a received signal strength indication (received signal strength indication, RSSI). However, wireless modules and antenna designs of mobile phones of different models are different to some extent, resulting in a large difference in received signal strength indications of the vehicle.

Consequently, calibration precision of the vehicle is low, and user experience of touchless unlocking and locking is greatly affected.

### SUMMARY

Embodiments of this application provide a calibration method, apparatus, and system, so that carrier calibration can be more accurate, to improve user experience of touchless unlocking and locking performed by using a digital key technology.

According to a first aspect, a calibration method is provided. The method is applied to a mobile terminal. The method includes: The mobile terminal receives a first message sent by a carrier, where the first message includes location information of at least one first calibration point; and the mobile terminal prompts, based on the first message, a user to move to the at least one first calibration point, where a first signal that is sent by the mobile terminal and that corresponds to the at least one first calibration point is used for calibration of the mobile terminal.

The mobile terminal may be a terminal device with a Bluetooth connection capability, for example, a tablet computer, a mobile phone, a smartwatch, or a wearable device.

For example, the first signal that is sent by the mobile terminal and that corresponds to the at least one first calibration point may be understood as a first signal sent by the mobile terminal at a location of the at least one first calibration point or at a location near the at least one first calibration point.

For example, that the first signal is used for calibration of the mobile terminal may be understood as follows: The carrier may complete calibration of the mobile terminal at the at least one first calibration point based on the first signal.

In this embodiment of this application, the mobile terminal may receive the location information of the at least one calibration point from the carrier, and prompt, based on the location information of the at least one calibration point, the user to move to the at least one calibration point, to complete calibration. In this manner, carrier calibration can be more accurate, to improve user experience of touchless unlocking and locking performed by using a digital key technology.

With reference to the first aspect, in some implementations of the first aspect, the first message further includes a calibration route. The calibration route includes the at least one first calibration point and a recommended route between a second calibration point and a third calibration point, and the second calibration point and the third calibration point are calibration points included in the at least one first calibration point. The method further includes: The mobile terminal displays the calibration route.

Both the second calibration point and the third calibration point may be the first calibration points, and the recommended route between the second calibration point and the third calibration point may be a straight line, a broken line, a curve, or the like. This is not limited in this embodiment of this application.

Optionally, the recommended route between the second calibration point and the third calibration point may be an optimal recommended route, that is, a distance at which the user moves from the second calibration point to the third calibration point is shortest.

Optionally, although the calibration route includes the recommended route between the second calibration point and the third calibration point, the user may not move from the second calibration point to the third calibration point based on the recommended route.

In this embodiment of this application, the first message may carry the calibration route, and the mobile terminal may display the calibration route. In this manner, the user may move from the second calibration point to the third calibration point based on a prompt of the calibration route, to complete calibration on the at least one first calibration point.

With reference to the first aspect, in some implementations of the first aspect, before the mobile terminal prompts, based on the first message, a user to move to the at least one first calibration point, the method further includes: The mobile terminal receives information about a first location sent by the carrier, where the information about the first location includes a distance and an angle of the mobile terminal relative to the carrier; and the mobile terminal displays the information about the first location, where the information about the first location is used to determine route information of reaching the at least one first calibration point.

Optionally, the route information may include one or more of a distance, a direction, an angle, and a route that the mobile terminal needs to move.

In this embodiment of this application, the mobile terminal may receive the information about the first location from the carrier, and can determine, based on the information about the first location, the route information of reaching the at least one first calibration point. In this manner, the mobile terminal does not need to perform self-positioning, and can determine, only based on the information about the first location sent by the carrier, the route information of reaching the at least one first calibration point.

With reference to the first aspect, in some implementations of the first aspect, before the mobile terminal prompts, based on the first message, a user to move to the at least one first calibration point, the method further includes: The mobile terminal obtains information about a second location, where the information about the second location includes positioning information of the mobile terminal; and the mobile terminal displays the information about the second location, where the information about the second location is used to determine route information of reaching the at least one first calibration point.

In this embodiment of this application, the mobile terminal may obtain the positioning information of the mobile terminal, and determine, based on the positioning information, the route information of reaching the at least one calibration point. In this manner, the carrier does not need to measure a distance and an angle of the mobile terminal relative to the carrier, so that information exchange between the mobile terminal and the carrier can be reduced.

With reference to the first aspect, in some implementations of the first aspect, before the mobile terminal receives a first message sent by a carrier, the method further includes: The mobile terminal sends first indication information to the carrier, where the first indication information is used to request the carrier to start calibration.

In this embodiment of this application, after the mobile terminal indicates the carrier to start calibration, the mobile terminal can receive the location information of the at least one first calibration point sent by the carrier. In this manner, the carrier can be prevented from pushing location information of a calibration point for no reason, so that the user can control an entire calibration process.

With reference to the first aspect, in some implementations of the first aspect, the method further includes: The mobile terminal receives second indication information sent by the carrier, where the second indication information indicates the mobile terminal to move from a fourth calibration point to a fifth calibration point, or indicates that a fourth calibration point is successfully calibrated, and the fourth calibration point and the fifth calibration point are calibration points included in the at least one first calibration point.

Both the fourth calibration point and the fifth calibration point may be the first calibration points.

In this embodiment of this application, after the fourth calibration point is successfully calibrated, the mobile terminal can receive the second indication information sent by the carrier, to notify the mobile terminal that the fourth calibration point is successfully calibrated or that the mobile terminal can move from the fourth calibration point to the fifth calibration point. In this manner, the mobile terminal can learn of a calibration status of the carrier for a current calibration point, to prompt the user to move to a next calibration point in time.

With reference to the first aspect, in some implementations of the first aspect, the method further includes: The mobile terminal informs the user that the fourth calibration point is successfully calibrated, or prompts the user with a recommended route from the fourth calibration point to the fifth calibration point.

In this embodiment of this application, after the fourth calibration point is successfully calibrated, the mobile terminal may inform the user that the fourth calibration point is successfully calibrated or prompt the user with the recommended route from the fourth calibration point to the fifth calibration point. In this way, the user can learn of a calibration status of a current calibration point and move to a next calibration point in time.

With reference to the first aspect, in some implementations of the first aspect, prompting the user to move to the at least one first calibration point includes: The mobile terminal prompts, by using a display or voice prompt, the user to move to the at least one first calibration point.

According to a second aspect, a calibration method is provided. The method is applied to a carrier. The method includes: The carrier sends a first message to a mobile terminal, where the first message includes location information of at least one first calibration point; the carrier receives a first signal sent by the mobile terminal, where the first signal is used for calibration of the mobile terminal, and the first signal corresponds to the at least one first calibration point; and the carrier performs a calibration operation on the at least one first calibration point based on signal strength and/or signal quality of the first signal.

For example, that the carrier performs the calibration operation on the at least one first calibration point may be as follows: The carrier compares the strength and/or the quality of the first signal with strength and/or quality of a signal preset in the carrier, and if the strength and/or the quality of the first signal are/is the same as or similar to the strength and/or the quality of the signal preset in the carrier, the at least one first calibration point is successfully calibrated. After the calibration is successful, when the mobile terminal moves to a location near the at least one first calibration point again, the mobile terminal can automatically unlock or lock a vehicle door of the carrier.

In this embodiment of this application, the carrier can send the location information of the at least one calibration point to the mobile terminal, and can perform the calibration operation based on the strength and/or the quality of the first signal sent by the mobile terminal. In this manner, carrier calibration can be more accurate, to improve user experience of touchless unlocking and locking performed by using a digital key technology.

With reference to the second aspect, in some implementations of the second aspect, the first message further includes a calibration route. The calibration route includes the at least one first calibration point and a recommended route between a second calibration point and a third calibration point, and the second calibration point and the third calibration point are calibration points included in the at least one first calibration point.

In this embodiment of this application, the first message sent by the carrier may carry the calibration route, so that the mobile terminal displays the calibration route on a display interface. In this manner, it is convenient for the user to move from the second calibration point to the third calibration point based on a prompt of the calibration route.

With reference to the second aspect, in some implementations of the second aspect, the method further includes: The carrier obtains information about a first location, where the information about the first location includes a distance and an angle of the mobile terminal relative to the carrier; and the carrier sends the information about the first location to the mobile terminal.

In this embodiment of this application, the carrier can obtain the distance and the angle of the mobile terminal relative to the carrier, to notify the mobile terminal of the foregoing information, so that the mobile terminal completes calibration on the at least one first calibration point.

With reference to the second aspect, in some implementations of the second aspect, that the carrier obtains information about a first location includes: The carrier obtains the information about the first location by using an ultra sound sensor.

With reference to the second aspect, in some implementations of the second aspect, before the carrier sends a first message to a mobile terminal, the method further includes: The carrier receives first indication information sent by the mobile terminal, where the first indication information is used to request the carrier to start calibration.

In this embodiment of this application, when the carrier receives a calibration starting indication information sent by the mobile terminal, the carrier sends the first message to the mobile terminal. In this manner, the carrier can be prevented from pushing location information of a calibration point to the mobile terminal for no reason.

With reference to the second aspect, in some implementations of the second aspect, the method further includes: The carrier sends second indication information to the mobile terminal, where the second indication information indicates the mobile terminal to move from a fourth calibration point to a fifth calibration point, or indicates that a fourth calibration point is successfully calibrated, and the fourth calibration point and the fifth calibration point are calibration points included in the at least one first calibration point.

In this embodiment of this application, after the fourth calibration point is successfully calibrated, the carrier can send the second indication information to the mobile terminal, to notify the mobile terminal that the fourth calibration point is successfully calibrated or that the mobile terminal can move to the fifth calibration point. In this manner, the mobile terminal can learn of a calibration status of the carrier for a current calibration point in time, to calibrate a next calibration point in time.

According to a third aspect, a calibration apparatus is provided. The apparatus includes a transceiver unit and a processing unit. The transceiver unit is configured to receive a first message sent by a carrier, where the first message includes location information of at least one first calibration point.

The processing unit is configured to prompt, based on the first message, a user to move to the at least one first calibration point, where a first signal that is sent by the calibration apparatus and that corresponds to the at least one first calibration point is used for calibration of the calibration apparatus.

With reference to the third aspect, in some implementations of the third aspect, the first message further includes a calibration route. The calibration route includes the at least one first calibration point and a recommended route between a second calibration point and a third calibration point, and the second calibration point and the third calibration point are calibration points included in the at least one first calibration point. The processing unit is further configured to display the calibration route.

With reference to the third aspect, in some implementations of the third aspect, the transceiver unit is further configured to receive information about a first location sent by the carrier, where the information about the first location includes a distance and an angle of the calibration apparatus relative to the carrier. The processing unit is further configured to display the information about the first location, where the information about the first location is used to determine route information of reaching the at least one first calibration point.

With reference to the third aspect, in some implementations of the third aspect, the processing unit is further configured to: obtain information about a second location, where the information about the second location includes positioning information of the calibration apparatus; and display the information about the second location, where the information about the second location is used to determine route information of reaching the at least one first calibration point.

With reference to the third aspect, in some implementations of the third aspect, the transceiver unit is further configured to send first indication information to the carrier, where the first indication information is used to request the carrier to start calibration.

With reference to the third aspect, in some implementations of the third aspect, the transceiver unit is further configured to receive second indication information sent by the carrier, where the second indication information indicates the calibration apparatus to move from a fourth calibration point to a fifth calibration point, or indicates that a fourth calibration point is successfully calibrated, and the fourth calibration point and the fifth calibration point are calibration points included in the at least one first calibration point.

With reference to the third aspect, in some implementations of the third aspect, the processing unit is further configured to: inform the user that the fourth calibration point is successfully calibrated, or prompt the user with a recommended route from the fourth calibration point to the fifth calibration point.

With reference to the third aspect, in some implementations of the third aspect, the processing unit is specifically configured to prompt, by using a display or voice prompt, the user to move to the at least one first calibration point.

According to a fourth aspect, a calibration apparatus is provided. The apparatus includes a transceiver unit and a processing unit. The transceiver unit is configured to: send a first message to a mobile terminal, where the first message includes location information of at least one first calibration point; and receive a first signal sent by the mobile terminal, where the first signal is used for calibration of the mobile terminal, and the first signal corresponds to the at least one first calibration point. The processing unit is configured to perform a calibration operation on the at least one first calibration point based on signal strength and/or signal quality of the first signal.

With reference to the fourth aspect, in some implementations of the fourth aspect, the first message further includes a calibration route. The calibration route includes the at least one first calibration point and a recommended route between a second calibration point and a third calibration point, and the second calibration point and the third calibration point are calibration points included in the at least one first calibration point.

With reference to the fourth aspect, in some implementations of the fourth aspect, the processing unit is further configured to obtain information about a first location, where the information about the first location includes a distance and an angle of the mobile terminal relative to the calibration apparatus. The transceiver unit is further configured to send the information about the first location to the mobile terminal.

With reference to the fourth aspect, in some implementations of the fourth aspect, the processing unit is specifically configured to obtain the information about the first location by using an ultra sound sensor.

With reference to the fourth aspect, in some implementations of the fourth aspect, the transceiver unit is further configured to receive first indication information sent by the mobile terminal, where the first indication information is used to request the calibration apparatus to start calibration.

With reference to the fourth aspect, in some implementations of the fourth aspect, the transceiver unit is further configured to send second indication information to the mobile terminal, where the second indication information indicates the mobile terminal to move from a fourth calibration point to a fifth calibration point, or indicates that a fourth calibration point is successfully calibrated, and the fourth calibration point and the fifth calibration point are calibration points included in the at least one first calibration point.

According to a fifth aspect, a calibration apparatus is provided. The apparatus includes at least one processor and a memory. The at least one processor is coupled to the memory, and is configured to read and execute instructions in the memory, to enable the apparatus to implement the method in any one of the implementations of the first aspect or the second aspect.

According to a sixth aspect, a computer-readable medium is provided. The computer-readable medium stores program code. When the computer program code is run on a computer, the computer is enabled to perform the method in any one of the implementations of the first aspect or the second aspect.

According to a seventh aspect, a computer program product is provided. The computer product includes a computer program. When the computer program is run, a computer is enabled to perform the method in any one of the implementations of the first aspect or the second aspect.

According to an eighth aspect, a chip is provided. The chip includes a circuit, and the circuit is configured to perform the method in any one of the implementations of the first aspect or the second aspect.

According to a ninth aspect, a mobile terminal is provided, including the calibration apparatus in any implementation of the third aspect.

According to a tenth aspect, a carrier is provided, including the calibration apparatus in any implementation of the fourth aspect.

With reference to the tenth aspect, in some implementations of the tenth aspect, the carrier is a vehicle.

According to an eleventh aspect, a calibration system is provided, including the mobile terminal in the ninth aspect and the carrier in the tenth aspect.

### BRIEF DESCRIPTION OF DRAWINGS

FIG. 1 is a functional diagram of a carrier according to an embodiment of this application;
FIG. 2 shows a calibration method according to an embodiment of this application;
FIG. 3 shows another calibration method according to an embodiment of this application;
FIG. 4 shows a system architecture to which a calibration method is applicable according to an embodiment of this application;
FIG. 5 is a schematic flowchart of a calibration method according to an embodiment of this application;
FIG. 6 is a schematic flowchart of another calibration method according to an embodiment of this application;
FIG. 7(a) to FIG. 7(h) are a diagram of an application scenario to which a calibration method is applicable according to an embodiment of this application;
FIG. 8(a) to FIG. 8(g) are a diagram of an application scenario to which another calibration method is applicable according to an embodiment of this application;
FIG. 9 shows a calibration apparatus according to an embodiment of this application; and
FIG. 10 shows another calibration apparatus according to an embodiment of this application.

### DESCRIPTION OF EMBODIMENTS

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, prefix words "first", "second", and the like are merely used to distinguish between different described objects, and do not limit a location, a sequence, a priority, a quantity, content, or the like of the described object. In embodiments of this application, use of a prefix word such as an ordinal number for distinguishing between the described objects does not constitute a limitation on the described objects. For descriptions of the described objects, refer to the descriptions in the context in the claims or embodiments. Use of such a prefix word should not constitute a redundant limitation.

The following describes technical solutions of embodiments in this application with reference to the accompanying drawings.

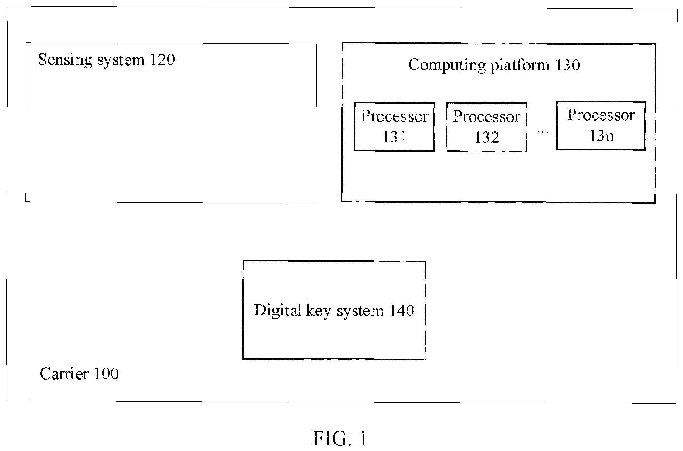

FIG. 1 is a functional diagram of a carrier 100 according to an embodiment of this application. It should be understood that FIG. 1 and related descriptions are merely examples, and do not limit the carrier in embodiments of this application.

The carrier 100 may include a plurality of subsystems, for example, a sensing system 120, a computing platform 130, and a digital key system 140. Optionally, the carrier 100 may include more or fewer subsystems, and each subsystem may include one or more components. In addition, all subsystems and components of the carrier 100 may be interconnected in a wired or wireless manner.

The sensing system 120 may include several types of sensors for sensing information about an ambient environment of the carrier 100. For example, the sensing system 120 may include a positioning system. The positioning system may be a global positioning system (global positioning system, GPS), a BeiDou system, or another positioning system. The sensing system 120 may include one or more of an inertial measurement unit (inertial measurement unit, IMU), a lidar, a millimeter wave radar, an ultrasonic radar, and a camera apparatus.

Some or all of functions of the carrier 100 may be controlled by the computing platform 130. The computing platform 130 may include processors 131 to 13n (n is a positive integer). The processor is a circuit with a signal processing capability. In an implementation, the processor may be a circuit with an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 130 may further include a memory. The memory is configured to store instructions. Some or all of the processors 131 to 13n may invoke the instructions in the memory, to implement a corresponding function.

The computing platform 130 may control the functions of the carrier 100 based on inputs received from various subsystems (for example, the sensing system 120). For example, the computing platform 130 can control, based on an input received from the sensing system 120, a vehicle door of the carrier to be open or closed. In some embodiments, the computing platform 130 may be configured to control many aspects of the carrier 100 and the subsystems of the carrier.

The digital key system 140 can perform functions such as digital key authentication and calibration, and managing use of a digital key.

Optionally, the foregoing components are merely examples. During actual application, the components in the foregoing modules may be added or removed according to an actual requirement. FIG. 1 should not be construed as a limitation on embodiments of this application.

The carrier 100 in this application may include a road transportation means, a water transportation means, an air transportation means, an industrial device, an agricultural device, an entertainment device, or the like. For example, the carrier 100 may be a vehicle. The vehicle is a vehicle in a broad sense, and may be a transportation means (such as a commercial vehicle, a passenger vehicle, a motorcycle, a flight vehicle, or a train), an industrial vehicle (such as a pallet truck, a trailer, or a tractor), an engineering vehicle (such as an excavator, a bulldozer, or a crane), an agricultural device (such as a lawn mower or a harvester), a recreation device, a toy vehicle, or the like. A type of the vehicle is not specifically limited in embodiments of this application. For another example, the carrier 100 may be a transportation means such as an aircraft or a ship.

The following uses an example in which the carrier 100 is a vehicle, to describe a technical problem that needs to be resolved in this application and technical solutions used in this application.

As intelligent vehicles are widely used in daily life, users expect that the intelligent vehicles and related devices can bring more comfortable intelligent experience. In this context, a digital key technology emerges. A main function of the digital key technology is: A user may establish a connection to the vehicle by using a terminal device, for example, a mobile phone, and a vehicle door is unlocked when the mobile phone approaches the vehicle from a distance, or a vehicle door is locked when the mobile phone is away from the vehicle. However, before this technology is applied, the vehicle needs to complete calibration based on a received signal strength indication RSSI. However, wireless modules and antenna designs of mobile phones of different models are different to some extent, resulting in a large difference in received signal strength indications of the vehicle. Consequently, calibration precision of the vehicle is low, and user experience of touchless unlocking and locking is greatly affected.

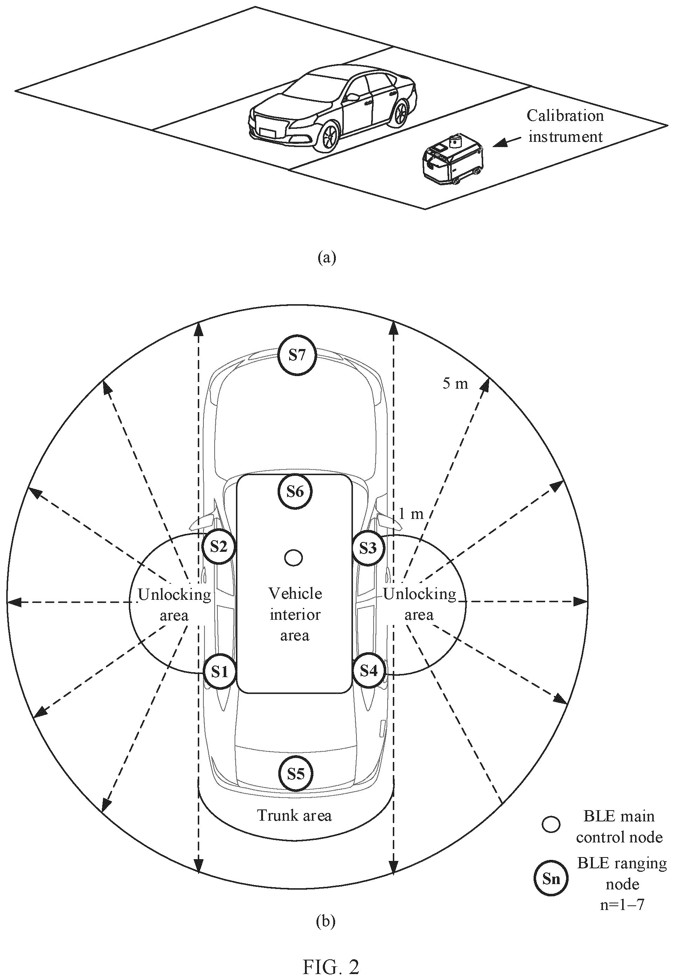

For example, FIG. 2 provides a calibration method. As shown in (a) in FIG. 2, a vehicle manufacturer may perform calibration by using a dedicated calibration instrument. A mobile terminal such as a mobile phone may be disposed on the calibration instrument. First, the mobile phone needs to establish a Bluetooth low energy (Bluetooth low energy, BLE) connection to a vehicle. Then, the calibration instrument is moved to a location near a BLE ranging node shown in (b) in FIG. 2. The mobile phone obtains, near each BLE ranging node, a current distance from the vehicle based on GPS positioning information, and notifies the vehicle of the distance, and the vehicle completes calibration based on a received signal strength indication. A calibration process of this calibration method is complex, and wireless modules and antenna designs of different mobile phone are different to some extent, resulting in a large difference in received signal strength indications of the vehicle. Consequently, calibration precision of the vehicle is low.

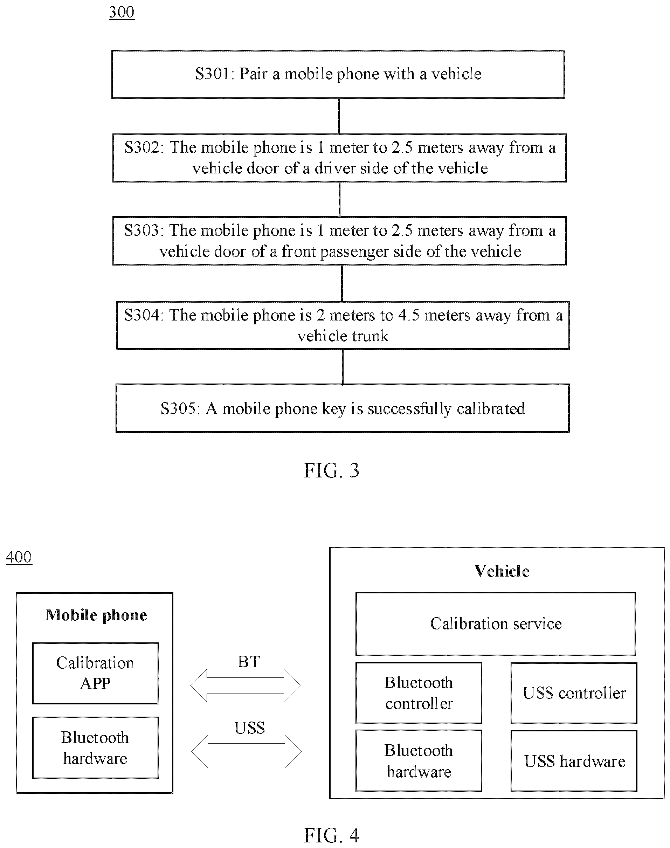

For another example, FIG. 3 provides another calibration method. A method 300 may include the following steps.

S301: Pair a mobile phone with a vehicle.

Specifically, a user may park the vehicle in an open area, and keep a good network connection between the mobile phone and the vehicle, to establish a connection between the mobile phone and the vehicle.

S302: The mobile phone is 1 meter to 2.5 meters away from a vehicle door of a driver side of the vehicle.

Specifically, the user may hold the mobile phone, and tap a calibration operation on the mobile phone within a range of 1 meter to 2.5 meters away from the vehicle door of the driver side of the vehicle, to complete calibration of the mobile phone near the vehicle door of the driver side.

S303: The mobile phone is 1 meter to 2.5 meters away from a vehicle door of a front passenger side of the vehicle.

Specifically, the user may hold the mobile phone, and tap a calibration operation on the mobile phone within a range of 1 meter to 2.5 meters away from the vehicle door of the front passenger side of the vehicle, to complete calibration of the mobile phone near the vehicle door of the front passenger side.

S304: The mobile phone is 2 meters to 4.5 meters away from a vehicle trunk.

Specifically, the user may hold the mobile phone, and tap a calibration operation on the mobile phone within a range of 2 meters to 4.5 meters away from the vehicle trunk, to complete calibration of the mobile phone near the vehicle trunk.

S305: A mobile phone key is successfully calibrated.

Specifically, after the mobile phone performs calibration around the vehicle, the user may use the mobile phone as a key to open or close the vehicle door.

Although this calibration method can simplify corresponding calibration steps, because a calibration manner of the method is rough, calibration precision of the method is difficult to be ensured. For example, after the user completes calibration within the range of 1 meter to 2.5 meters away from the vehicle door of the driver side, when the user moves at an edge of the range, the vehicle may not be able to perform a function of touchless unlocking or locking.

Embodiments of this application provide a calibration method, apparatus, and system, so that vehicle calibration can be more accurate, to improve user experience of touchless unlocking and locking performed by using a digital key technology.

Before the calibration method provided in embodiments of this application is described, a system architecture to which the calibration method is applicable is first described.

FIG. 4 shows the system architecture to which the calibration method is applicable according to an embodiment of this application.

As shown in FIG. 4, the system architecture may include a mobile phone and a vehicle. The mobile phone may include a calibration application (application, APP) and Bluetooth hardware. The calibration APP may have user interface (user interface, UI) display and interaction capabilities, and Bluetooth hardware has a Bluetooth positioning capability. The vehicle may include a calibration service module, a Bluetooth controller, an ultra sound sensor (ultra sound sensor, USS) controller, USS hardware, and Bluetooth hardware. The Bluetooth controller and the Bluetooth hardware may be collectively referred to as a Bluetooth positioning system, and are responsible for pairing with and establishing a connection to the mobile phone. The USS controller and the USS hardware may be collectively referred to as an ultrasonic positioning system, and are configured to receive a signal sent by the mobile phone and perform ranging. The calibration service module is responsible for calculating and managing calibration strategies, and coordinating and managing Bluetooth and ultrasonic positioning systems to complete calibration. The calibration module may be located in the digital key system 140 in the carrier 100.

After installing the calibration APP, users can use mobile phones (which may be of various models) of the users to connect to vehicles and complete high-precision calibration based on prompts on interfaces of the mobile phones.

It should be understood that, in this embodiment of this application, the mobile phone may alternatively be replaced with another mobile terminal for calibration. The mobile terminal may be a tablet computer, a watch, a wearable device, or another terminal device with a Bluetooth connection capability.

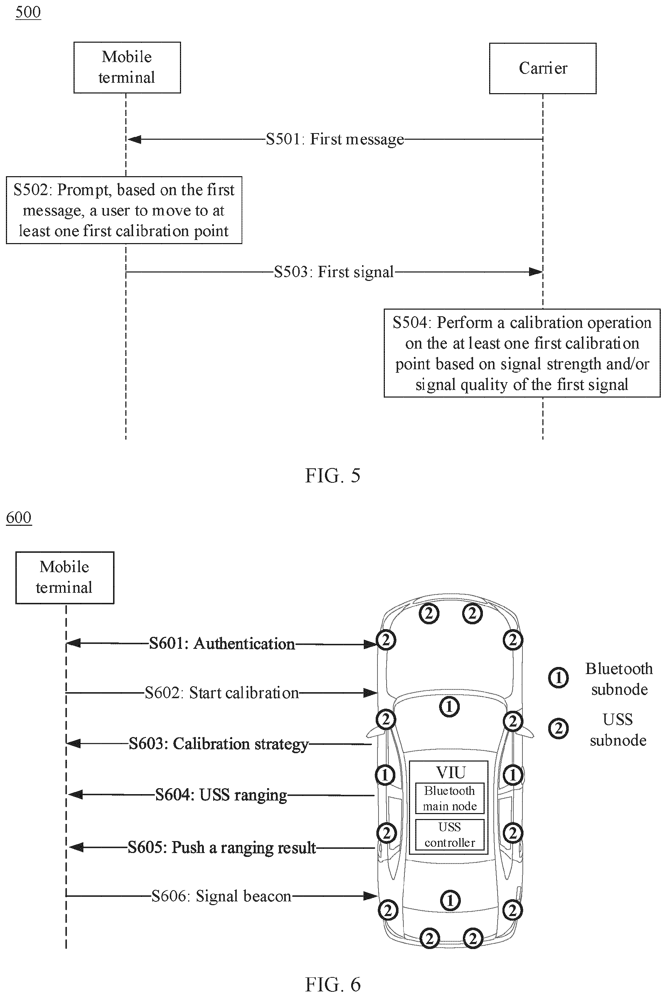

FIG. 5 is a schematic flowchart of a calibration method according to an embodiment of this application. The method 500 may be applied to the system architecture in FIG. 4. The method 500 may include the following steps.

S501: A mobile terminal receives a first message sent by a carrier.

The first message includes location information of at least one first calibration point.

For example, the mobile terminal may be a terminal device with a Bluetooth connection capability, for example, a tablet computer, a mobile phone, a smartwatch, or a wearable device.

In an embodiment, before step S501, the method further includes: The mobile terminal sends first indication information to the carrier, where the first indication information is used to request the carrier to start calibration. In this way, the carrier can be prevented from pushing location information of a calibration point for no reason, so that a user can control an entire calibration process.

S502: The mobile terminal prompts, based on the first message, the user to move to the at least one first calibration point.

Optionally, the mobile terminal may prompt, by using a display or voice prompt, the user to move to the at least one first calibration point.

In an embodiment, the first message may include a calibration route. The calibration route includes the at least one first calibration point and a recommended route between a second calibration point and a third calibration point, and the second calibration point and the third calibration point are calibration points included in the at least one first calibration point. After receiving the calibration route, the mobile terminal may display the calibration route. **In** this way, the user may move from the second calibration point to the third calibration point based on a prompt of the calibration route, to complete calibration on the at least one first calibration point.

Both the second calibration point and the third calibration point may be the first calibration points, and the recommended route between the second calibration point and the third calibration point may be a straight line, a broken line, a curve, or the like. This is not limited in this embodiment of this application.

Optionally, the recommended route between the second calibration point and the third calibration point may be an optimal recommended route, that is, a distance at which the user moves from the second calibration point to the third calibration point is shortest.

Optionally, although the calibration route includes the recommended route between the second calibration point and the third calibration point, the user may not move from the second calibration point to the third calibration point based on the recommended route.

In an embodiment, before step S502, the method may further include: The mobile terminal receives information about a first location sent by the carrier, where the information about the first location includes a distance and an angle of the mobile terminal relative to the carrier; and the mobile terminal displays the information about the first location, where the information about the first location is used to determine route information of reaching the at least one first calibration point. In this way, the mobile terminal does not need to perform self-positioning, and can determine, only based on the information about the first location sent by the carrier, the route information of reaching the at least one first calibration point.

Optionally, the route information may include one or more of a distance, a direction, an angle, and a route that the mobile terminal needs to move.

In an embodiment, before step S502, the method may further include: The mobile terminal obtains information about a second location, where the information about the second location includes positioning information of the mobile terminal; and the mobile terminal displays the information about the second location, where the information about the second location is used to determine route information of reaching the at least one first calibration point. In this way, the carrier does not need to measure a distance and an angle of the mobile terminal relative to the carrier, so that information exchange between the mobile terminal and the carrier can be reduced.

S503: The mobile terminal sends a first signal.

The first signal is used for calibration of the mobile terminal, and the first signal corresponds to the at least one first calibration point.

S504: The carrier performs a calibration operation on the at least one calibration point based on signal strength and/or signal quality of the first signal.

For example, that the carrier performs the calibration operation on the at least one first calibration point may be as follows: The carrier compares the strength and/or the quality of the first signal with strength and/or quality of a signal preset in the carrier, and if the strength and/or the quality of the first signal are/is the same as or similar to the strength and/or the quality of the signal preset in the carrier, the at least one first calibration point is successfully calibrated. After the calibration is successful, when the mobile terminal moves to a location near the at least one first calibration point again, the mobile terminal can automatically unlock or lock a vehicle door of the carrier.

In this embodiment of this application, the mobile terminal may receive the location information of the at least one calibration point from the carrier, and prompt, based on the location information of the at least one calibration point, the user to move to the at least one calibration point, to complete calibration. In this manner, carrier calibration can be more accurate, to improve user experience of touchless unlocking and locking performed by using a digital key technology.

In an embodiment, in step S504, the method further includes: The mobile terminal receives second indication information sent by the carrier, where the second indication information indicates the mobile terminal to move from a fourth calibration point to a fifth calibration point, or indicates that a fourth calibration point is successfully calibrated, and the fourth calibration point and the fifth calibration point are calibration points included in the at least one first calibration point.

Both the fourth calibration point and the fifth calibration point may be the first calibration points.

In this embodiment of this application, after the fourth calibration point is successfully calibrated, the mobile terminal can receive the second indication information sent by the carrier, to notify the mobile terminal that the fourth calibration point is successfully calibrated or that the mobile terminal can move to the fifth calibration point. In this manner, the mobile terminal can learn of a calibration status of the carrier for a current calibration point, to prompt the user to move to a next calibration point in time.

In an embodiment, in step S504, the mobile terminal may inform the user that the fourth calibration point is successfully calibrated or prompt the user with a recommended route from the fourth calibration point to the fifth calibration point.

In this embodiment of this application, after the fourth calibration point is successfully calibrated, the mobile terminal may inform the user that the fourth calibration point is successfully calibrated or prompt the user with the recommended route from the fourth calibration point to the fifth calibration point. In this way, the user can learn of a calibration status of a current calibration point and move to a next calibration point in time.

FIG. 6 is a schematic flowchart of another calibration method according to an embodiment of this application. The method 600 describes in detail steps S501 to S504 in the method 500. The following describes the method 600 by using an example in which a carrier is a vehicle.

S601: A mobile terminal performs authentication with the vehicle.

Specifically, the mobile terminal with a Bluetooth capability and a Bluetooth primary node of the vehicle complete authentication, and establish a Bluetooth communication channel.

Optionally, the mobile terminal may be a mobile phone, a tablet computer, a watch, a wearable device, or another terminal device with a Bluetooth connection capability.

Optionally, a manner of authentication between the mobile terminal and the vehicle may be as follows: The mobile terminal generates a group of random numbers and sends the group of random numbers to the vehicle; the vehicle receives the random numbers and compares the random numbers with another group of random numbers calculated by the vehicle; and if values of two groups of random numbers are the same, a connection between the mobile terminal and the vehicle is established.

S602: The mobile terminal starts calibration.

Specifically, a user may perform an operation on a calibration APP of the mobile terminal to determine whether to start calibration. After detecting an operation of starting calibration by the user, the mobile terminal may send calibration starting indication information to the vehicle, where the indication information may be the first indication information in the method 500.

S603: The vehicle pushes a calibration strategy to the mobile terminal.

Specifically, the vehicle may push the calibration strategy to the mobile terminal by using the Bluetooth primary node through the Bluetooth channel. The calibration strategy may be the first message in the method 500.

Optionally, the calibration strategy may include location information of one or more calibration points.

S604: The vehicle performs USS ranging.

Specifically, the Bluetooth primary node inside the vehicle sends a request message to a USS controller, to request the USS controller to start ranging. After receiving the request message, the USS controller may send an ultrasonic wave for ranging.

S605: The vehicle pushes a ranging result to the mobile terminal.

Optionally, the ranging result may include a distance and an angle of the mobile terminal relative to the vehicle, and the ranging result may be the information about the first location in the method 500.

S606: The mobile terminal sends a signal (beacon) to the vehicle.

Specifically, the user may move to a specific calibration point based on a UI prompt on the mobile terminal. The mobile terminal may send the signal to the vehicle, and the signal may be the first signal in the method 500. The Bluetooth primary node and a Bluetooth subnode of the vehicle can record received strength and/or quality of the signal, and complete calibration on the current point.

Then, step S604 to step S606 are repeated to complete calibration on remaining points, that is, the user can move to a next calibration point based on a UI prompt on the mobile terminal until calibration is completed.

In this embodiment of this application, after calibration is started, the vehicle can perform ranging, and push a ranging result and location information of a calibration point to the mobile terminal, and the mobile terminal prompts the user to move to a corresponding calibration point to complete calibration. In this manner, vehicle calibration can be more accurate, to improve user experience of touchless unlocking and locking performed by using a digital key technology.

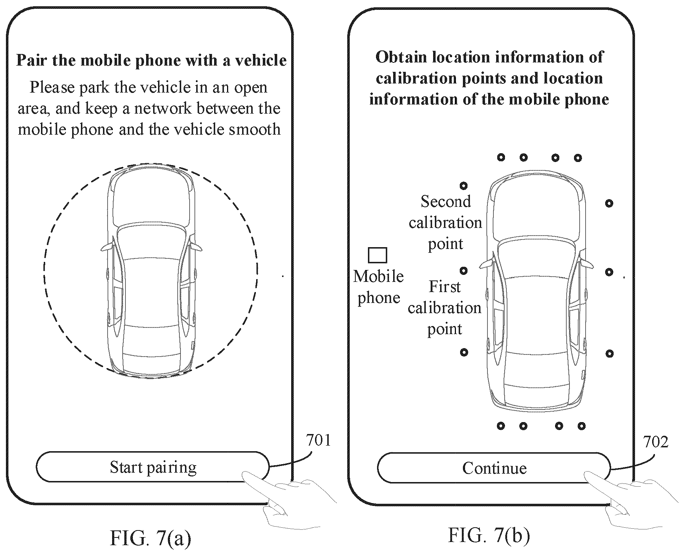

FIG. 7(a) to FIG. 7(h) are a diagram of an application scenario to which a calibration method is applicable according to an embodiment of this application. The method 500 and the method 600 may be applied to the application scenario. The following describes the application scenario shown in FIG. 7(a) to FIG. 7(h) by using an example in which a mobile terminal is a mobile phone and a carrier is a vehicle.

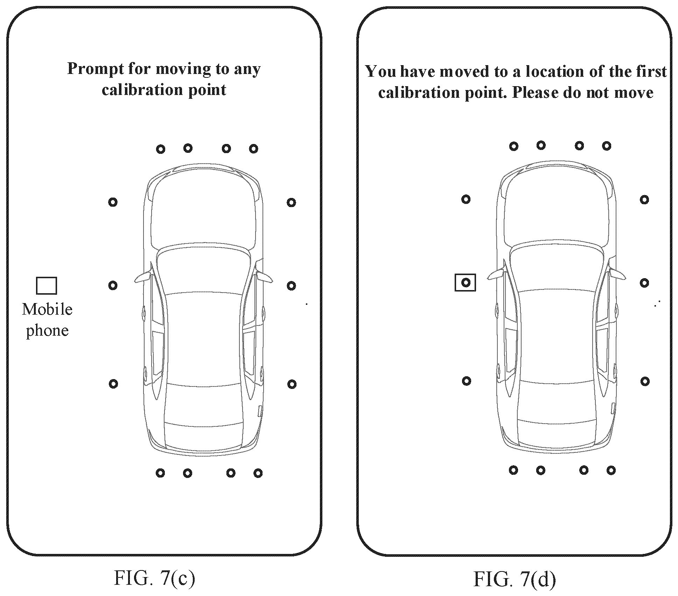

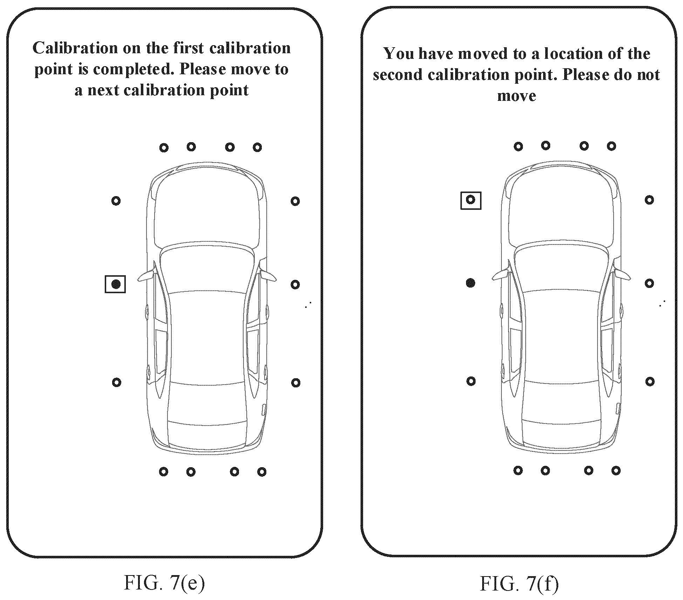

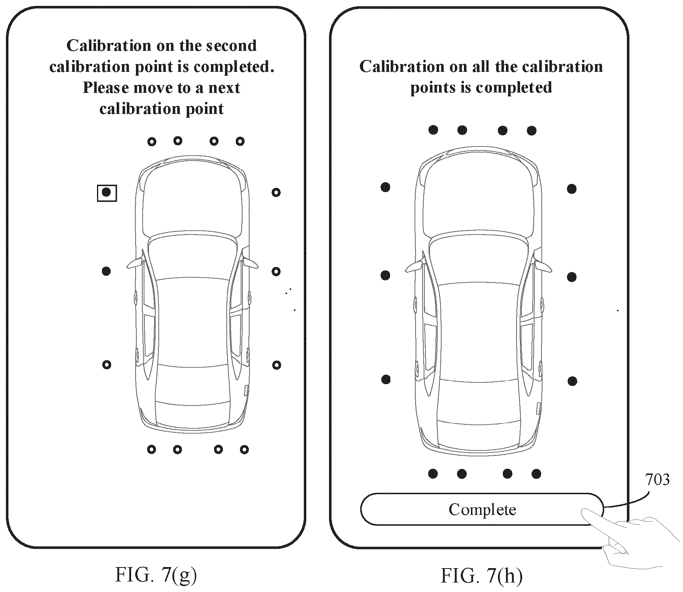

A GUI shown in FIG. 7(a) is a mobile phone-vehicle pairing interface displayed on the mobile phone. The interface is used to prompt a user to park the vehicle in an open area, and ensure that a network between the vehicle and the mobile phone is connected. After the mobile phone detects an operation of tapping a control 701 by the user, the mobile phone can pair with the vehicle. After completing the pairing, the mobile phone displays a GUI shown in FIG. 7(b). The GUI may display location information of different calibration points and location information of the mobile phone. The location information of the mobile phone may be sent to the mobile phone after the vehicle performs measurement, or may be obtained by the mobile phone by using GPS positioning information. The location information of the different calibration points may be preset by the vehicle and then sent to the mobile phone. After the mobile phone detects an operation of tapping a control 702 by the user, a GUI shown in FIG. 7(c) may be displayed on the mobile phone. The GUI is an interface prompting the user to move to any calibration point. Optionally, distances and angles between a current location of the mobile phone and the different calibration points may be further displayed in the interface. The user may move to any calibration point based on a prompt in the interface. In a GUI shown in FIG. 7(d), when the user moves to a first calibration point, the mobile phone may inform the user that You have moved to a location of the first calibration point, and Please do not move. In this case, the vehicle can record a received signal strength indication of the mobile phone at the first calibration point based on a first signal sent by the mobile phone, and complete calibration on the first calibration point. After calibration on the first calibration point is completed, a GUI shown in FIG. 7(e) may be displayed on the mobile phone. The GUI is used to inform the user that Calibration on the first calibration point is completed, and Please move to a next calibration point. In addition, after calibration on the first calibration point is completed, the first calibration point can be marked with a specific color (for example, green or black) in a UI of the mobile phone. After the user moves to the next calibration point (for example, a second calibration point), a GUI shown in FIG. 7(f) may be displayed on the mobile phone, to inform the user that You have moved to the second calibration point, and Please do not move. In this case, the vehicle can record a received signal strength indication of the mobile phone at the second calibration point based on the first signal sent by the mobile phone, and complete calibration on the second calibration point. After calibration on the second calibration point is completed, a GUI shown in FIG. 7(g) can be displayed on the mobile phone, to inform the user that Calibration on the second positioning point is completed, and Please move to a next calibration point, that is, complete calibration on another calibration point. After calibration on all the calibration points is completed, a GUI shown in FIG. 7(h) can be displayed on the mobile phone. The GUI is used to notify the user that Calibration on all the calibration points is completed. In this case, the user may tap a control 703 to exit a calibration interface.

It should be understood that the first calibration point and the second calibration point may be calibration points included in the at least one first calibration point in the method 500.

It should be further understood that FIG. 7(a) to FIG. 7(h) are merely examples for description, and should not be construed as a limitation on this embodiment of this application. Interfaces displayed in FIG. 7(a) to FIG. 7(h) may alternatively be interfaces displayed on a terminal device, for example, a watch or a tablet computer.

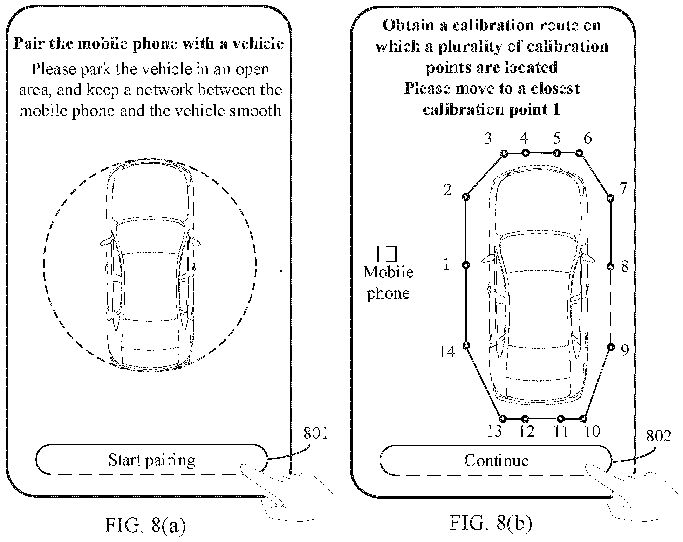

FIG. 8(a) to FIG. 8(g) are a diagram of an application scenario to which another calibration method is applicable according to an embodiment of this application. The method 500 and the method 600 may be applied to the application scenario. The following describes the application scenario shown in FIG. 8(a) to FIG. 8(g) by using an example in which a mobile terminal is a mobile phone and a carrier is a vehicle.

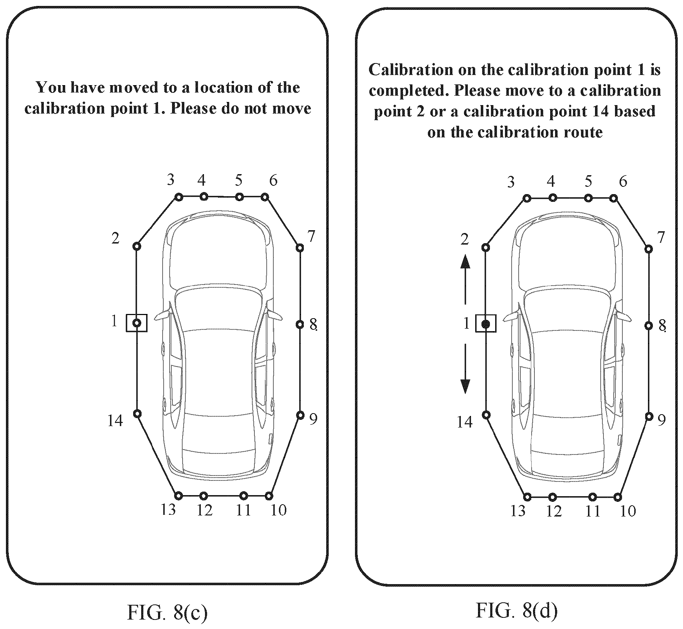

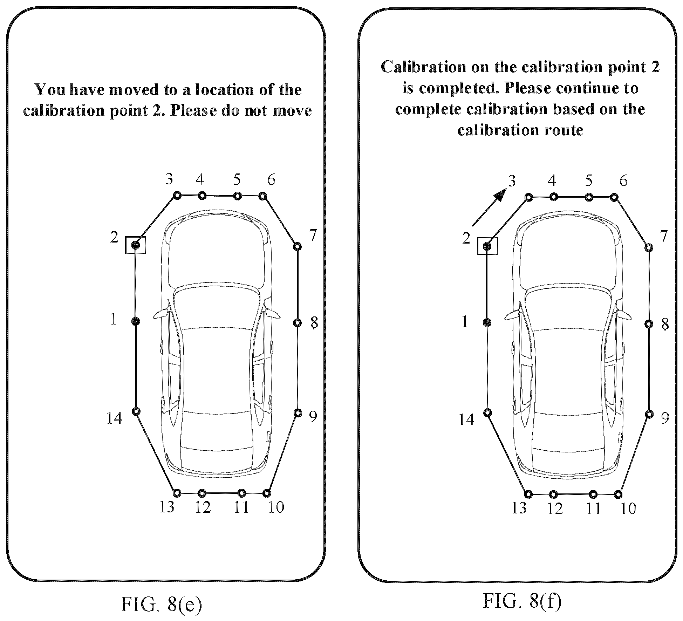

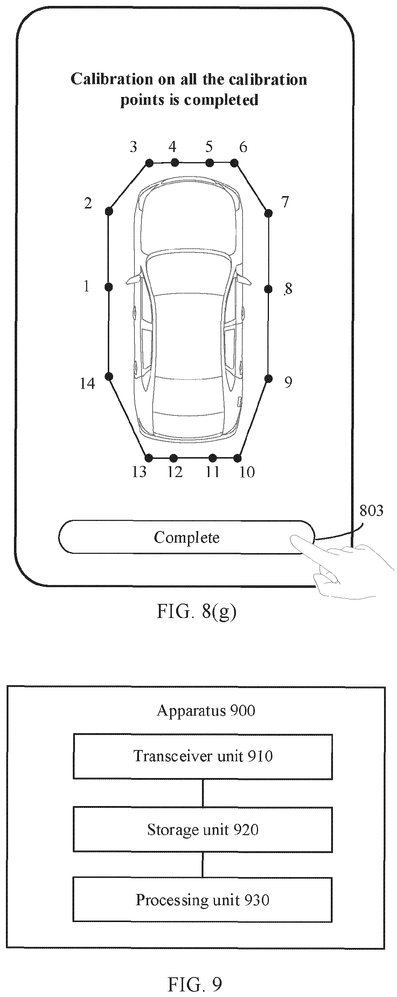

A GUI shown in FIG. 8(a) is a mobile phone-vehicle pairing interface displayed on the mobile phone. The interface is used to prompt a user to park the vehicle in an open area, and ensure that a network between the vehicle and the mobile phone is connected. After the mobile phone detects an operation of tapping the control 801 by the user, a GUI shown in FIG. 8(b) may be displayed on the mobile phone. The GUI may display location information of different calibration points, location information of the mobile phone, and a calibration route. The interface is used to prompt the user to move to a calibration point 1 that is closest to the user. The location information of the mobile phone may be sent to the mobile phone after the vehicle performs measurement, or may be obtained by the mobile phone by using GPS positioning information. The location information of the different calibration points and the calibration route may be preset or planned by the vehicle and then sent to the mobile phone. After the mobile phone detects an operation of tapping a control 802 by the user, a GUI shown in FIG. 8(c) may be displayed on the mobile phone. The GUI is used to inform the user that You have moved to a location of the calibration point 1, and Please do not move. The vehicle can record a received signal strength indication and/or quality of the mobile phone at the calibration point 1 based on a first signal sent by the mobile phone, and complete calibration on the calibration point 1. After calibration on the calibration point 1 is completed, a GUI shown in FIG. 8(d) may be displayed on the mobile phone. The GUI is used to inform the user that Calibration on the calibration point 1 is completed, and Please move to a calibration point 2 or a calibration point 14 based on a moving route. In addition, the calibration point 1 can be marked with a specific color (for example, green or black) in a UI of the mobile phone. After the user moves along the calibration route to the calibration point 2, a GUI shown in FIG. 8(e) may be displayed on the mobile phone. The GUI is used to inform the user that You have moved to a location of the calibration point 2, and Please do not move. In addition, the vehicle can record a received signal strength indication and/or quality of the mobile phone at the calibration point 2 based on the first signal sent by the mobile phone, and complete calibration on the calibration point 2. After calibration on the calibration point 2 is completed, a GUI shown in FIG. 8(f) may be displayed on the mobile phone. The GUI is used to inform the user that Calibration on the calibration point 2 is completed, and Please continue to complete calibration on remaining calibration points based on the calibration route. After calibration on all the calibration points is completed, a GUI shown in FIG. 8(g) may be displayed on the mobile phone. The GUI is used to notify user notifies the user that Calibration on all the calibration points is completed. In this case, the user may tap a control 803 to exit a calibration interface.

It should be understood that the calibration point 1 to the calibration point 14 may be calibration points included in the at least one first calibration point in the method 500.

It should be further understood that FIG. 8(a) to FIG. 8(g) are merely examples for description, and should not be construed as a limitation on this embodiment of this application. Interfaces displayed in FIG. 8(a) to FIG. 8(g) may alternatively be interfaces displayed on a terminal device, for example, a watch, a tablet computer, or a wearable device.

Embodiments of this application further provide an apparatus configured to implement any one of the foregoing methods. The apparatus includes units configured to implement steps performed by the carrier or the mobile terminal in any one of the foregoing methods.

FIG. 9 is a diagram of a calibration apparatus 900 according to an embodiment of this application. The apparatus 900 may include a transceiver unit 910, a storage unit 920, and a processing unit 930. The transceiver unit 910 is configured to receive and send instructions and/or data, and the transceiver unit 910 may also be referred to as a communication interface or a communication unit. The storage unit 920 is configured to implement a corresponding storage function, and store corresponding instructions and/or data. The processing unit 930 is configured to perform data processing. The processing unit 930 may read the instructions and/or the data in the storage unit, so that the apparatus 900 implements the foregoing calibration method.

In a design, the calibration apparatus 900 is configured to perform an action performed by the mobile terminal in the foregoing method embodiment.

The calibration apparatus 900 may include a transceiver unit 910 and a processing unit 930. The transceiver unit 910 is configured to receive a first message sent by a carrier, where the first message includes location information of at least one first calibration point. The processing unit 930 is configured to prompt, based on the first message, a user to move to the at least one first calibration point, where a first signal that is sent by the calibration apparatus 900 and that corresponds to the at least one first calibration point is used for calibration of the calibration apparatus 900.

In a possible implementation, the first message further includes a calibration route. The calibration route includes the at least one first calibration point and a recommended route between a second calibration point and a third calibration point, and the second calibration point and the third calibration point are calibration points included in the at least one first calibration point. The processing unit 930 is further configured to display the calibration route.

In a possible implementation, the transceiver unit 910 is further configured to receive information about a first location sent by the carrier, where the information about the first location includes a distance and an angle of the calibration apparatus 900 relative to the carrier. The processing unit 930 is further configured to display the information about the first location, where the information about the first location is used to determine route information of reaching the at least one first calibration point.

In a possible implementation, the processing unit 930 is further configured to: obtain information about a second location, where the information about the second location includes positioning information of the calibration apparatus 900; and display the information about the second location, where the information about the second location is used to determine route information of reaching the at least one first calibration point.

In a possible implementation, the transceiver unit 910 is further configured to send first indication information to the carrier, where the first indication information is used to request the carrier to start calibration.

In a possible implementation, the transceiver unit 910 is further configured to receive second indication information sent by the carrier, where the second indication information indicates the calibration apparatus 900 to move from a fourth calibration point to a fifth calibration point, or indicates that a fourth calibration point is successfully calibrated, and the fourth calibration point and the fifth calibration point are calibration points included in the at least one first calibration point.

In a possible implementation, the processing unit 930 is further configured to: inform the user that the fourth calibration point is successfully calibrated, or prompt the user with a recommended route from the fourth calibration point to the fifth calibration point.

In a possible implementation, the processing unit 930 is specifically configured to prompt, by using a display or voice prompt, the user to move to the at least one first calibration point.

In another design, the calibration apparatus 900 is configured to perform an action performed by the carrier in the foregoing method embodiment.

The calibration apparatus 900 may include a transceiver unit 910 and a processing unit 930. The transceiver unit 910 is configured to: send a first message to a mobile terminal, where the first message includes location information of at least one first calibration point; and receive a first signal sent by the mobile terminal, where the first signal is used for calibration of the mobile terminal, and the first signal corresponds to the at least one first calibration point. The processing unit 930 is configured to perform a calibration operation on the at least one first calibration point based on signal strength and/or signal quality of the first signal.

In a possible implementation, the first message further includes a calibration route, the calibration route includes the at least one first calibration point and a recommended route between a second calibration point and a third calibration point, and the second calibration point and the third calibration point are calibration points included in the at least one first calibration point.

In a possible implementation, the processing unit 930 is further configured to obtain information about a first location, where the information about the first location includes a distance and an angle of the mobile terminal relative to the calibration apparatus 900. The transceiver unit 910 is further configured to send the information about the first location to the mobile terminal.

In a possible implementation, the processing unit 930 is specifically configured to obtain the information about the first location by using an ultra sound sensor.

In a possible implementation, the transceiver unit 910 is further configured to receive first indication information sent by the mobile terminal, where the first indication information is used to request the calibration apparatus 900 to start calibration.

In a possible implementation, the transceiver unit 910 is further configured to send second indication information to the mobile terminal, where the second indication information indicates the mobile terminal to move from a fourth calibration point to a fifth calibration point, or indicates that a fourth calibration point is successfully calibrated, and the fourth calibration point and the fifth calibration point are calibration points included in the at least one first calibration point.

Optionally, if the apparatus 900 is located in the carrier 100, the processing unit 930 may be the processor 131 shown in FIG. 1.

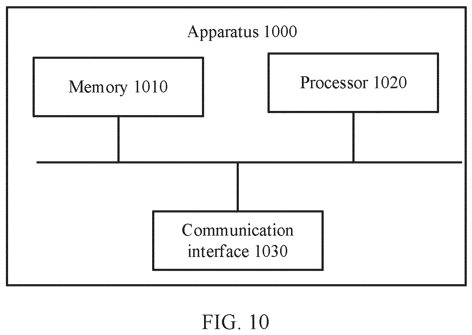

FIG. 10 is a diagram of another calibration apparatus 1000 according to an embodiment of this application.

The calibration apparatus 1000 includes a memory 1010, a processor 1020, and a communication interface 1030. The memory 1010, the processor 1020, and the communication interface 1030 are connected through an internal connection path. The memory 1010 is configured to store instructions. The processor 1020 is configured to execute the instructions stored in the memory 1010, to control the communication interface 1030 to obtain information, or enable the calibration apparatus to perform the calibration method in the foregoing embodiments. Optionally, the memory 1010 may be coupled to the processor 1020 through the interface, or may be integrated together with the processor 1020.

It should be noted that the communication interface 1030 uses a transceiver apparatus, for example, but not limited to, a transceiver. The communication interface 1030 may further include an input/output interface (input/output interface).

The processor 1020 stores one or more computer programs, and the one or more computer programs include instructions. When the instructions are run by the processor 1020, the calibration apparatus 1000 is enabled to perform the calibration method in the foregoing embodiments.

In an implementation process, steps in the foregoing methods can be performed by using a hardware integrated logic circuit in the processor 1020, or by using instructions in a form of software. The method disclosed with reference to embodiments of this application may be directly performed and completed by a hardware processor, or performed and completed by a combination of hardware and software modules in a processor. The software module may be located in a mature storage medium in the art, for example, a random access memory, a flash memory, a read-only memory, a programmable read-only memory, an electrically erasable programmable memory, or a register. The storage medium is located in the memory 1010. The processor 1020 reads information in the memory 1010 and completes the steps in the foregoing methods in combination with hardware of the processor 1020. To avoid repetition, details are not described herein again.

Optionally, the communication interface 1030 in FIG. 10 may implement the transceiver unit 910 in FIG. 9, the memory 1010 in FIG. 10 may implement the storage unit 920 in FIG. 9, and the processor 1020 in FIG. 10 may implement the processing unit 930 in FIG. 9.

Optionally, the apparatus 900 or the apparatus 1000 may be a computing platform, and the computing platform may be a vehicle-mounted computing platform or a cloud computing platform.

Optionally, the apparatus 900 or the apparatus 1000 may be located in the carrier 100 in FIG. 1.

Optionally, the apparatus 900 or the apparatus 1000 may be the computing platform 130 in the carrier in FIG. 1.

Embodiments of this application further provide a computer-readable medium. The computer-readable medium stores program code. When the computer program code is run on a computer, the computer is enabled to perform any one of the methods in FIG. 5 to FIG. 8(a) to FIG. 8(g).

Embodiments of this application further provide a chip, including a circuit. The circuit is configured to perform any one of the methods in FIG. 5 to FIG. 8(a) to FIG. 8(g).

Embodiments of this application further provide a computer program product. The computer product includes a computer program. When the computer program is run, a computer is enabled to perform any one of the methods in FIG. 5 to FIG. 8(a) to FIG. 8(g).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one location, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or a part contributing to a conventional technology, or some of the technical solutions may be implemented in a form of software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A calibration method, wherein the method is applied to a mobile terminal, and the method comprises:
receiving, by the mobile terminal, a first message sent by a carrier, wherein the first message comprises location information of at least one first calibration point; and
prompting, by the mobile terminal based on the first message, a user to move to the at least one first calibration point, wherein a first signal that is sent by the mobile terminal and that corresponds to the at least one first calibration point is used for calibration of the mobile terminal.

2. The method according to claim 1, wherein the first message further comprises a calibration route, the calibration route comprises the at least one first calibration point and a recommended route between a second calibration point and a third calibration point, the second calibration point and the third calibration point are calibration points comprised in the at least one first calibration point, and the method further comprises:
displaying, by the mobile terminal, the calibration route.

3. The method according to claim 1 or 2, wherein before the prompting, by the mobile terminal based on the first message, a user to move to the at least one first calibration point, the method further comprises:
receiving, by the mobile terminal, information about a first location sent by the carrier, wherein the information about the first location comprises a distance and an angle of the mobile terminal relative to the carrier; and
displaying, by the mobile terminal, the information about the first location, wherein the information about the first location is used to determine route information of reaching the at least one first calibration point.

4. The method according to claim 1 or 2, wherein before the prompting, by the mobile terminal based on the first message, a user to move to the at least one first calibration point, the method further comprises:
obtaining, by the mobile terminal, information about a second location, wherein the information about the second location comprises positioning information of the mobile terminal; and
displaying, by the mobile terminal, the information about the second location, wherein the information about the second location is used to determine route information of reaching the at least one first calibration point.

5. The method according to any one of claims 1 to 4, wherein before the receiving, by the mobile terminal, a first message sent by a carrier, the method further comprises:
sending, by the mobile terminal, first indication information to the carrier, wherein the first indication information is used to request the carrier to start calibration.

6. The method according to any one of claims 1 to 5, wherein the method further comprises:
receiving, by the mobile terminal, second indication information sent by the carrier, wherein the second indication information indicates the mobile terminal to move from a fourth calibration point to a fifth calibration point, or indicates that the fourth calibration point is successfully calibrated, and the fourth calibration point and the fifth calibration point are calibration points comprised in the at least one first calibration point.

7. The method according to claim 6, wherein the method further comprises:
informing, by the mobile terminal, the user that the fourth calibration point is successfully calibrated, or prompting the user with a recommended route from the fourth calibration point to the fifth calibration point.

8. The method according to any one of claims 1 to 7, wherein the prompting a user to move to the at least one first calibration point comprises:
prompting, by the mobile terminal by using a display or voice prompt, the user to move to the at least one first calibration point.

9. A calibration method, wherein the method is applied to a carrier, and the method comprises:
sending, by the carrier, a first message to a mobile terminal, wherein the first message comprises location information of at least one first calibration point;
receiving, by the carrier, a first signal sent by the mobile terminal, wherein the first signal is used for calibration of the mobile terminal, and the first signal corresponds to the at least one first calibration point; and
performing, by the carrier, a calibration operation on the at least one first calibration point based on signal strength and/or signal quality of the first signal.

10. The method according to claim 9, wherein the first message further comprises a calibration route, the calibration route comprises the at least one first calibration point and a recommended route between a second calibration point and a third calibration point, and the second calibration point and the third calibration point are calibration points comprised in the at least one first calibration point.

11. The method according to claim 9 or 10, wherein the method further comprises:
obtaining, by the carrier, information about a first location, wherein the information about the first location comprises a distance and an angle of the mobile terminal relative to the carrier; and
sending, by the carrier, the information about the first location to the mobile terminal.

12. The method according to claim 11, wherein the obtaining, by the carrier, information about a first location comprises:
obtaining, by the carrier, the information about the first location by using an ultra sound sensor.

13. The method according to any one of claims 9 to 12, wherein before the sending, by the carrier, a first message to a mobile terminal, the method further comprises:
receiving, by the carrier, first indication information sent by the mobile terminal, wherein the first indication information is used to request the carrier to start calibration.

14. The method according to any one of claims 9 to 13, wherein the method further comprises:
sending, by the carrier, second indication information to the mobile terminal, wherein the second indication information indicates the mobile terminal to move from a fourth calibration point to a fifth calibration point, or indicates that the fourth calibration point is successfully calibrated, and the fourth calibration point and the fifth calibration point are calibration points comprised in the at least one first calibration point.

15. A calibration apparatus, wherein the apparatus comprises a transceiver unit and a processing unit;
the transceiver unit is configured to receive a first message sent by a carrier, wherein the first message comprises location information of at least one first calibration point; and
the processing unit is configured to prompt, based on the first message, a user to move to the at least one first calibration point, wherein a first signal that is sent by the calibration apparatus and that corresponds to the at least one first calibration point is used for calibration of the calibration apparatus.

16. The apparatus according to claim 15, wherein the first message further comprises a calibration route, the calibration route comprises the at least one first calibration point and a recommended route between a second calibration point and a third calibration point, and the second calibration point and the third calibration point are calibration points comprised in the at least one first calibration point; and
the processing unit is further configured to display the calibration route.

17. The apparatus according to claim 15 or 16, wherein
the transceiver unit is further configured to receive information about a first location sent by the carrier, wherein the information about the first location comprises a distance and an angle of the calibration apparatus relative to the carrier; and
the processing unit is further configured to display the information about the first location, wherein the information about the first location is used to determine route information of reaching the at least one first calibration point.

18. The apparatus according to claim 15 or 16, wherein
the processing unit is further configured to:
obtain information about a second location, wherein the information about the second location comprises positioning information of the calibration apparatus; and
display the information about the second location, wherein the information about the second location is used to determine route information of reaching the at least one first calibration point.

19. The apparatus according to any one of claims 15 to 18, wherein
the transceiver unit is further configured to send first indication information to the carrier, wherein the first indication information is used to request the carrier to start calibration.

20. The apparatus according to any one of claims 15 to 19, wherein
the transceiver unit is further configured to receive second indication information sent by the carrier, wherein the second indication information indicates the calibration apparatus to move from a fourth calibration point to a fifth calibration point, or indicates that the fourth calibration point is successfully calibrated, and the fourth calibration point and the fifth calibration point are calibration points comprised in the at least one first calibration point.

21. The apparatus according to claim 20, wherein
the processing unit is further configured to: inform the user that the fourth calibration point is successfully calibrated, or prompt the user with a recommended route from the fourth calibration point to the fifth calibration point.

22. The apparatus according to any one of claims 15 to 21, wherein
the processing unit is specifically configured to prompt, by using a display or voice prompt, the user to move to the at least one first calibration point.

23. A calibration apparatus, wherein the apparatus comprises a transceiver unit and a processing unit;
the transceiver unit is configured to:
send a first message to a mobile terminal, wherein the first message comprises location information of at least one first calibration point; and
receive a first signal sent by the mobile terminal, wherein the first signal is used for calibration of the mobile terminal, and the first signal corresponds to the at least one first calibration point; and
the processing unit is configured to perform a calibration operation on the at least one first calibration point based on signal strength and/or signal quality of the first signal.

24. The apparatus according to claim 23, wherein the first message further comprises a calibration route, the calibration route comprises the at least one first calibration point and a recommended route between a second calibration point and a third calibration point, and the second calibration point and the third calibration point are calibration points comprised in the at least one first calibration point.

25. The apparatus according to claim 23 or 24, wherein
the processing unit is further configured to obtain information about a first location, wherein the information about the first location comprises a distance and an angle of the mobile terminal relative to the calibration apparatus; and
the transceiver unit is further configured to send the information about the first location to the mobile terminal.

26. The apparatus according to claim 25, wherein
the processing unit is specifically configured to obtain the information about the first location by using an ultra sound sensor.

27. The apparatus according to any one of claims 23 to 26, wherein
the transceiver unit is further configured to receive first indication information sent by the mobile terminal, wherein the first indication information is used to request the calibration apparatus to start calibration.

28. The apparatus according to any one of claims 23 to 27, wherein
the transceiver unit is further configured to send second indication information to the mobile terminal, wherein the second indication information indicates the mobile terminal to move from a fourth calibration point to a fifth calibration point, or indicates that the fourth calibration point is successfully calibrated, and the fourth calibration point and the fifth calibration point are calibration points comprised in the at least one first calibration point.

29. A calibration apparatus, comprising a processor and a memory, wherein the processor is coupled to the memory, and is configured to read and execute instructions in the memory, to perform the method according to any one of claims 1 to 8.

30. A calibration apparatus, comprising a processor and a memory, wherein the processor is coupled to the memory, and is configured to read and execute instructions in the memory, to perform the method according to any one of claims 9 to 14.

31. A computer-readable medium, wherein the computer-readable medium stores program code, and when the computer program code is run on a computer, the computer is enabled to perform the method according to any one of claims 1 to 14.

32. A computer program product, wherein the computer program product comprises a computer program, and when the computer program is run, a computer is enabled to perform the method according to any one of claims 1 to 14.

33. A chip, comprising a circuit, wherein the circuit is configured to perform the method according to any one of claims 1 to 14.

34. A mobile terminal, comprising the calibration apparatus according to any one of claims 15 to 22.

35. A carrier, comprising the calibration apparatus according to any one of claims 23 to 28.

36. A calibration system, comprising the mobile terminal according to claim 34 and the carrier according to claim 35.
